# EUROPEAN PATENT APPLICATION

(11) **EP 4 271 135 A1**
(43) Date of publication of application: **01.11.2023**
(21) Application number: 22169896.2
(22) Date of filing: 26.04.2022
(51) Int. Cl.: H05B 45/50, H05B 45/58, G05B 23/02, H05B 47/20, H05B 47/21

(54) **LED-DRIVER WITH ANOMALY DETECTION CAPABILITIES**

(71) Applicant: Tridonic GmbH & Co. KG, 6851 Dornbirn (AT)
(72) Inventor: Schmölzer, Andreas, 6850 Dornbirn (AT); Zengerle, Thomas, 6850 Dornbirn (AT); Klein, Tobias, 6850 Dornbirn (AT); Carracedo Cordovilla, Luis Javier, 6850 Dornbirn (AT); Hüttinger, Ulrich, 6850 Dornbirn (AT); Saccavini, Lukas, 6850 Dornbirn (AT); Romano, Fabio, 6850 Dornbirn (AT); Auer, Hans, 6850 Dornbirn (AT); Stark, Stefan, 6850 Dornbirn (AT); Kucera, Clemens, 6850 Dornbirn (AT)
(74) Representative: Beder, Jens

(57) **Abstract**

The invention concerns a method for detecting anomalous events in a driver device of a building infrastructure system, a corresponding driver device, e.g. a light driver device, and a building infrastructure system. The method comprises, in a usage profile generating phase, obtaining parameter data for at least one physical parameter of the driver device during operation of the driver device in the building infrastructure system during a predefined time period; and generating a usage profile for the driver device based on the obtained parameter data. The generated usage profile includes characteristic parameter ranges for the at least one physical parameter determined based on the obtained parameter data. In a subsequent monitoring phase, the method obtains current parameter data for the at least one physical parameter of the driver device, then determines whether an anomalous event in the driver device has occurred by comparing the obtained current parameter data with the usage profile of the driver device. The method generates and outputs a signal generated based on the determined anomalous event.

## Description

The invention relates to the field of technical building infrastructure, in particular to light systems and light driver devices. A method for detecting anomalous events for a driver device, a corresponding program, driver device, and building infrastructure system are proposed.

The technical building infrastructure, sometimes referred under the term building management system (BMS, also building automation system BAS), includes a computer-based control system installed in a building that controls and monitors the building's mechanical and electrical equipment including heating, ventilation, lighting, power systems, fire alarm systems, and security systems. A BMS consists of software and hardware components, wherein the software is usually configured in a hierarchical manner. The systems linked to a BMS typically represent a large proportion of the energy consumption of the building, in particular when lighting is included. BMS systems are a critical component to managing energy demand. Moreover, the technical building infrastructure includes systems that typically arrange a large number of devices over an extensive area in and around the building, which require regular maintenance, identification and replacement of defective equipment, and add further significant cost to maintaining the building infrastructure.

For the example of a light system, the devices may include luminaires, lighting models for emitting light, driver devices for driving the lighting modules, presence detectors, switches, further control gear, light system management servers, linked via dedicated communication equipment, e.g. for a DALI^{®}, ZigBee^{®} or matter (recently published standard for smart home applications) based control network, and emergency power supply including batteries for storing electric energy.

Current LED driver devices forming a key element of modern light systems often provide basic operational data, collected by the LED driver device and transmitted via a DALI^{®} interface to a central light system management server. The operational data may be utilized in several ways, for example, the provided operational data may be used for tracking the power consumption of the individual devices in the entire light system, for monitoring a current LED current and the set dimming level of the LED driver device, as well as a reporting failure modes. Thus, the operational data may be used for tracking the current status of the light system. Although there is already some information available in the operational data provided by the LED driver devices, the available operational data may enable monitoring a current status of the light system and its power consumption, but lacks the capability to predict current and future states of the light system reliably with sufficient detail.

It is an object of the present invention to provide an improved method for monitoring operation of electrical circuitry in building infrastructure devices that that addresses the above-mentioned issues. It addresses in particular the issue of enhancing the understanding of a state of the building infrastructure system, and its implications and a potential future evolvement of the state of the building infrastructure system.

Particularly, it is an object to improve the capabilities in a building infrastructure system for judging whether the building infrastructure system is not only currently operating according to the requirements, but also if there exist early indications of potential future failures within the building infrastructure, without increasing the cost of the technical building infrastructure disproportionally by adding additional test equipment.

In a first aspect, the method according to claim 1 achieves the aforementioned object. The program according to a second aspect, the driver device according to third aspect, and the building infrastructure system according to a fourth aspect provide further advantageous solutions to the problem.

The features of the dependent claims define further advantageous embodiments.

The first aspect concerns the method for detecting anomalous events in a driver device of a building infrastructure system. The building infrastructure system includes in particular a light driver device. The method comprises a usage profile generating phase and a monitoring phase. In the usage profile generating phase, the method obtains parameter data during a predefined time period for at least one physical parameter of the driver device during operation of the driver device in the building infrastructure system. The methods continues in the usage profile generating phase with generating a usage profile for the driver device based on the obtained parameter data. The usage profile includes a characteristic parameter range for the at least one physical parameter, which is determined based on the obtained parameter data. In the monitoring phase, the method obtains current parameter data for the at least one physical parameter of the driver device, and determines whether an anomalous event in the driver device has occurred by comparing the obtained current parameter data with the usage profile of the driver device. The method generates and outputs a signal that is generated based on the determined anomalous event.

An anomalous event is an event, in which at least one specific physical parameter of the driver device has a parameter value that deviates from the range of parameter values normally detected or expected due to the physical and in particular electrical design of the driver device. The physical parameter may have an uncertain or unexpected value. Occurrence of an anomalous event in the driver device includes that the driver device, at least for a limited time, is in an anomalous operational state. Occurrence of an anomalous event may also include that at least one electrical or mechanical interface of the driver device with its environment, an unusual or unexpected value for a measurable physical characteristic is detected.

Implementing the claimed method enables to use processes of predictive maintenance for the building infrastructure system based on events determined by evaluating physical parameters of the driver devices in the building infrastructure system. Performing predictive maintenance has the advantage of reducing downtime of the building infrastructure system, which in turn increases availability of the building infrastructure system and decreases overall operating cost of the building infrastructure system.

The method uses the available basic control infrastructure of the building infrastructure system for collecting parameter data on individual driver devices in their operational environment and determining individual usage profiles for the driver devices in their actual environment based on the collected parameter data. The determined usage profiles enable to derive from the perspective of the individual driver device, whether current parameter data for the physical parameter indicates problems for the individual driver device or the system, or indicates that there might arise problems in the future. For example, a conspicuous cluster of overvoltage spikes on a mains supply line representing an increased stress level for the elements at a mains supply interface of the driver device, may reduce expected lifespan of the electric circuit elements. An operator may take suitable measures based on the knowledge provided by the signal generated by the method, for example taking additional measures to suppress overvoltage spikes, envisaging an early replacement of the drive device, preferably with a type of driver device having a high resilience to overvoltage spikes on the mains supply interface.

The method according to one embodiment comprises, in the monitoring phase, increasing a counter value of a counter of the predefined failure event when determining that the anomalous event has occurred. The method proceeds with comparing the counter value with a threshold value, and outputting the signal based on the determined anomalous event in case the counter value is equal to or exceeds the threshold value.

This embodiment enables to monitor anomalous events in the driver device, which in itself do not qualify as a highly critical failure, which is to be reported and acted upon immediately in order to mitigate the consequences for the building infrastructure system. The counted anomalous events may by their number of occurrence, or their frequency or rate of occurrence, indicate that a state of health of the driver device is decreasing over time.

The method according to an embodiment comprises, in the monitoring phase, increasing a counter value of a counter of the predefined failure event when determining that the anomalous event has occurred. The method then continues by evaluating a rate of increase of the counter value, and outputting the signal based on the determined anomalous event in case the evaluated rate of increase of the counter value increases.

An increasing rate of anomalous events may indicate that a breakdown of the driver device may be imminent, and preventive replacement of the driver device may be advisable in order to avoid an at least partial shutting down of the building infrastructure system.

The method may, in the monitoring phase, compare the obtained current parameter data with the usage profile of the driver device by comparing the obtained current parameter data with the characteristic parameter range of the usage profile, and determining that the anomalous event occurred when the current parameter data is outside the characteristic parameter range.

Comparing whether the measured parameter value is within an expected range of parameter values as included in the usage profile of the driver device, makes for a computationally simple and simultaneously reliable detection of outliers for physical parameters during operation of the driver device. Implementing the comparison requires only limited processing resources, for example in a microprocessor already present in the driver device. Most driver devices include integrated circuits, for example for controlling a switch of a switched power supply circuit, often used for purposes such as power factor correction (PFC) or DC/DC voltage conversion in the driver device.

The method may determine, in the monitoring phase, whether the anomalous event in the driver device has occurred by evaluating the obtained current parameter data and obtained current parameter data of at least one previous processing cycle, and the usage profile of the driver device with respect to trends in the current parameter data, current parameter data of the at least one previous processing cycle and the usage profile.

Analysing the obtained current parameter data of a current processing cycle in the monitoring phase together with stored current parameter data of at least one previous processing cycle may yield further information on the driver device and its current state, as well as enable to predict future states of the driver device. For example, the obtained parameter values may steadily approach a limit of the parameter range included in the usage profile, without yet being outside the parameter range. Thus, determining a trend based on the current parameter data and the past instances of parameter data may enable to predict whether the parameter will violate the limits of the parameter range of the usage profile in the near future provided the determined trend continue. This prediction may involve a computationally efficient extrapolation of based on the determined trend for the physical parameter over current parameter data over at least two processing cycles. A variation over time of the current parameter data with regard to the parameter ranges included in the usage profile of the driver device may yield information on future values to expected in the current parameter data, and therefore of future system states of the building infrastructure system as a whole, and the individual driver device in particular.

In an advantageous embodiment, the method comprises, in the monitoring phase, updating the usage profile including the characteristic parameter range based on the current parameter data.

This is in particular advantageous for adapting the usage profile, in particular the parameter ranges in the usage profile, to changes in environmental conditions or to aging processes of technical equipment, for example in the mains supply infrastructure or the driver device.

The at least one physical parameter may include at least one of an average dimming level for a predetermined time interval, a characteristic dim level curve for the predetermined time interval, an average power output for the predetermined time interval, a mains supply voltage provided to the driver device, a mains supply current provided to the driver device, a mains frequency of the mains supply, an average power consumption of the driver device.

Additionally or alternatively, the at least one physical parameter may comprise at least one of a load voltage provided by the driver device, a load current output by the driver device, a power loss of the driver device, an energy conversion efficiency of the driver device, an average rectifier half-bridge frequency, an internal DC bus voltage ripple value, a temperature of a control circuit of the driver device, a temperature on a printed circuit board of the driver device, and a temperature within a housing of the driver device.

Known driver devices collect operational data with a limited extent. Contrary thereto, the proposed method is adapted to monitor and to analyse a wide range of physical parameters characterizing on the one hand external interfaces of the driver device with the building infrastructure system and, on the other hand, internal parameters of the driver device. Analysing the cited physical parameters may reveal if there exist certain trends over time in the obtained parameter data, which may pose a threat to the driver device, which may indicate future problems, for example when anomalous events defined and detected based on these physical parameters occur with a certain predefined frequency. Measuring the cited physical parameters, and combining measuring the parameter values with a simple analysis of the measured values using the usage profile during the monitoring phase enables to implement an in-depth analysis while simultaneously the required processing resources are limited, and may even be provided by control circuits already present in the driver device. This enables an efficient implementation of the method, which is economically advantageous.

The method according to an embodiment comprises in the monitoring phase, at least one of adjusting a least one setting of the driver device based on the output signal, storing data on the determined anomalous event based on the output signal in a data storage, and outputting, based on the output signal, an alert to a building management server, or an operator.

The signal that is generated based on the detection of an anomalous event includes information on the driver device in its current application, which enables to take a range of actions based on the signal.

For example, adapting settings of the driver device becomes possible, in order to improve its capability to cope with the detected anomalous event. Adapting settings of the driver device might be automatically initiated by the building management system server based on the signal output by the driver device.

Alternatively or additionally, data on the anomalous event may be stored in a log file of the driver device, either stored in the driver device, or stored associated with the driver device. This provides historical parameter data, which enables an off-line analysis of the environment of the driver device, or enables accumulating data on highly relevant events in the usage history of the driver device.

According to an embodiment, the method comprises, in the usage profile generating phase, obtaining initial parameter data. The obtained initial parameter data includes predefined parameter ranges for the at least one physical parameter determined based on a physical and/or electrical structure of the driver device and/or the building management system. The method continues by generating the usage profile for the driver device based on the obtained parameter data and the obtained initial parameter data.

The initial parameter data provides a suitable starting point for the profile generating phase of the method, wherein basic assumptions for the national parameter data may be readily available from the design process of the driver device.

The method may include executing the steps of the usage profile generating phase in case of determining a structural change of the building infrastructure system.

In particular, automatically initiating a rerun of the profile generating phase enables to react to changes in the building infrastructure system and to adapt the usage profile is of the individual driver devices to the amended system structure by repeating the steps of the profile generating phase. This reduces the number of unnecessarily reported anomalous events in the monitoring phase after the changes to the building infrastructure system.

Repeating the profile generating phase provides updated usage profiles and therefore enables keep track with the implications of the amendments during the succeeding monitoring phase. Operator inventions are thereby minimized.

According to an embodiment, the method is executed at least in part by an edge gateway device, or by a light management server, or by a building management server.

The versatile structure of the method enables its implementation in current driver devices with only limited processing resources, for example a microcontroller or ASIC of an AC/DC converter circuit of the driver device. However, at least some method steps may be performed on intermediate layers of the building infrastructure system, for example by an edge gateway device, or alternatively by a central server, for example a light management server or building management system server. The implementations may differ with respect to the required processing resources and memory capacity for executing the individual processing steps of the method on the one hand, and on the other hand with regard to the required transmission bandwidth for transmitting the obtained parameter data, the obtained current parameter data, the usage profile data, or the signals over a communication network linking the components of the building infrastructure system.

According to embodiment, the method includes executing the usage profile generating phase for each of a plurality of driver devices of the building management system. The method may then store the generated usage profile for each driver device of the plurality of driver devices. In the monitoring phase, the method obtains the current parameter data for the at least one physical parameter of each driver device of the plurality of driver devices, and determines for each driver device whether an anomalous event has occurred by comparing the obtained current parameter data with the stored usage profile for each driver device of the plurality of driver devices. Subsequently, the method generates and outputs, by each driver device, the signal to the building infrastructure system in case the anomalous event is determined. The method further comprises a step of determining a current state of the building management system based on the signals output by the plurality of driver devices.

Performing the method for the plurality of driver devices installed in the building infrastructure system enables to derive information on the current state and to predict future states of the entire building infrastructure system, based on the combined information provided by the plurality of driver devices.

According to the second aspect, the computer program comprises instructions, which when the computer program is executed by a computer or signal processor, cause the computer or digital signal processor to carry out the method of the first aspect.

A driver device according to the third aspect may in particular be a light driver device. The driver device comprises a converter circuit configured to output a load current to a load, and a control circuit configured to control the converter circuit and to perform the method according to the first aspect.

The driver device according to one embodiment comprises a sensor circuit for sensing the at least one physical parameter, wherein the at least one physical parameter is an electrical parameter of at least one electrical component of the converter circuit. The at least one electrical component of the converter circuit comprises or corresponds to at least one of a critical component with respect to a lifetime of the converter circuit.

Focusing the attention of the method to monitoring critical components of the converter circuit of the driver device enables to obtain valuable information on the current state of the driver device by simultaneously using only limited processing resources for the monitoring, requiring only a limited communication bandwidth between the devices of the building infrastructure system, and uses the memory capacity for data storage in an economical manner. The additional cost for implementing the method are therefore modest.

A building infrastructure system according to the fourth aspect comprises a plurality of driver devices according to the third aspect, and a building management server. The building management server is configured to execute the method according to the first aspect.

The computer program according to the second aspect, the driver device according to the third aspect and the building infrastructure system according to the fourth aspect achieve corresponding advantages as the method according to the first aspect.

The description of embodiments refers to the enclosed figures, in which
- Fig. 1: is a simplified flowchart of the profile generating phase and the monitoring phase of the method for detecting anomalous events in a driver device of a building infrastructure system according to an embodiment;
- Fig. 2: shows a schematic view of major blocks of a light driver device for driving a lighting module according to an embodiment; and
- Fig. 3: illustrates the hierarchical structure of a building management system including a light system with a plurality of light driver devices according to an application.

In the figures, corresponding elements have the same reference signs. The proportions and dimensions of the elements shown in the figures do not represent the emergency luminaire and the emergency sign unit to scale, but are merely chosen to describe the structure and function of the emergency luminaire.

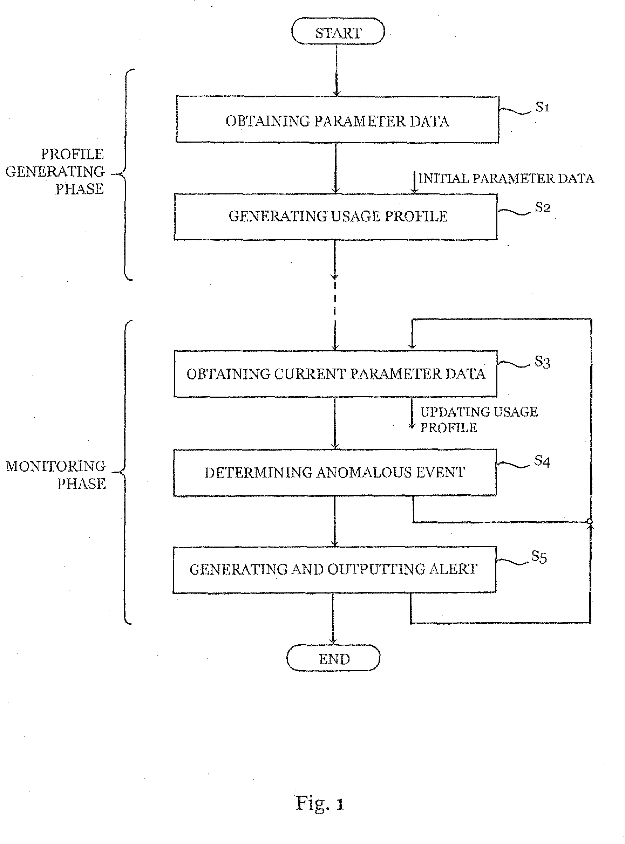

Fig. 1 is a simplified flowchart of the profile generating phase and the monitoring phase of the method for detecting anomalous events in a driver device of a building infrastructure system according to an embodiment.

The driver device of the building infrastructure system may be a light driver device 1. The method starts with performing the usage profile generating phase.

In step S1, the method obtains parameter data for at least one physical parameter of the light driver device 1 during operation of the light driver device 1 in the building infrastructure system. The step S1 is performed for a predefined time period.

The predefined time period (timeframe) may extend over timespan of one day, one week or even several weeks or months. Preferably, the length of the predetermined time period is selected in order to cover plural usage cycles for buildings such as day or a week.

The at least one physical parameter may include at least one of
- an average power output for a time period provided by the light driver device 1,
- a mains supply voltage provided to the light driver device 1,
- a mains supply current provided to the light driver device 1,
- a mains frequency of the mains supply, and
- an average power consumption of the light driver device 1.

Additionally or alternatively, the at least one physical parameter may comprise at least one of
- a load voltage provided by the light driver device 1,
- a load current provided by the light driver device 1,
- a power loss of the light driver device 1,
- an energy conversion efficiency of the light driver device 1,
- an average rectifier half-bridge frequency in the light driver device 1,
- an internal DC bus voltage ripple value in the light driver device 1,
- a temperature of a control circuit 3 of the light driver device 1,
- a temperature on a printed circuit board of the light driver device 1, and
- a temperature within a housing of the light driver device 1.

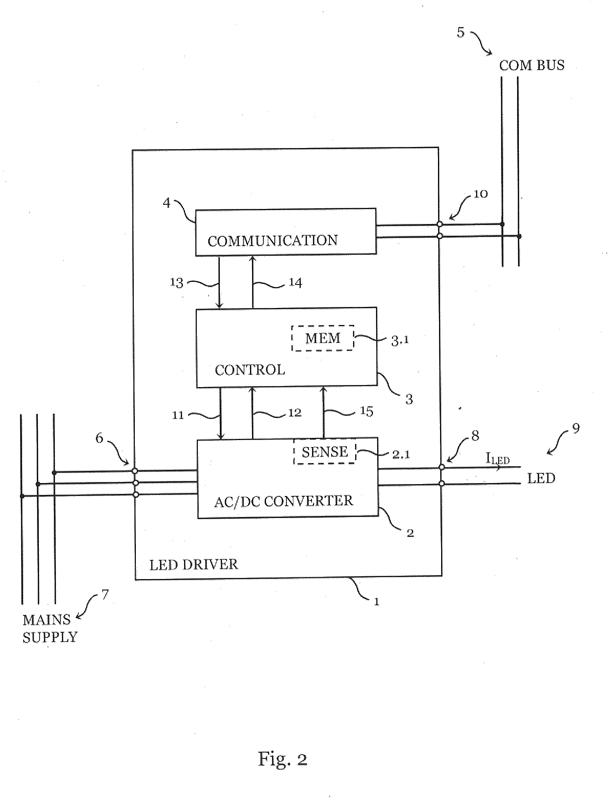

Some examples for physical parameters and methods for obtaining them will be discussed with reference the light driver device 1 of fig. 2.

In step S2 following to step S1, the method generates a usage profile for the light driver device 1 based on the obtained parameter data, which was acquired in step S1. The generated usage profile includes a characteristic parameter range for the at least one physical parameter, wherein step S2 determines the characteristic parameter range based on the obtained parameter data.

The generated usage profile is subsequently stored.

The method proceeds then to a monitoring phase, which essentially comprises steps S3, S4 and S5.In the monitoring phase, the method cyclically performs steps S3-S4-S3 or S3-S4-S5. The monitoring phase bases on the usage profile associated with light driver device 1 and its application in the building infrastructure system, which was generated in the profile generating phase.

In step S3, the methods obtains current parameter data for the at least one physical parameter of the light driver device 1.

In step S4, the method proceeds by determining whether an anomalous event occurred in the light driver device 1. In particular, in step S4, the obtained current parameter data is compared with the usage profile of the lighting driver device 1.

In case the method determines in step S4, that the method does not detect the anomalous event based on the current parameter data and the usage profile, the method returns to step S3.

In case the method determines in step S4, that the anomalous event occurred, the method proceeds to step S5. In step S5, the method generates and outputs a signal to the building infrastructure system based on the determined anomalous event from step S4.

The method illustrated in fig. 1 may be expanded to include further steps defining further advantageous embodiments.

In the monitoring phase, the method may add a process for updating the usage profile. The process for updating the usage profile may start with determining whether the current parameter data enables updating or recommends updating of the stored usage profile of the light driver device 1.

If determining, that the usage profile of the light driver device 1, the method uses the obtained current parameter data of the light driver device 1 and generates an updated usage profile for the light driver device 1 based on the stored usage profile and the current parameter data.

The process of updating the usage profile of the light driver device 1 may run in parallel to the monitoring process of steps S3, S4, S5. Alternatively or additionally, the process of updating the usage may be initiated automatically at regular time intervals, for example times of a reduced processing load for the data processing equipment of the building infrastructure system executing the method.

Alternatively or additionally, the process of updating the usage profile may be initiated manually by an operator or triggered by specific events. For example, in case an operator determines by an inspection that the current parameter data leading to an alert communicating an anomalous event at the light driver device 1 presents no sufficient risk to the light driver circuit 1 that merits an alert, the operator may initiate process of updating the usage profile.

Alternatively or additionally, the process of updating the usage profile may be initiated manually or automatically, in case a structural change in the building infrastructure system occurred. For example, when adding additional devices or removing devices, or amending the power grid of the building providing the mains supply 7, executing the process of updating the usage profile may be particularly advantageous.

In the profile generating phase, the method may perform the process for generating the usage profile in step S2 based on the obtained parameter data from step S1, and further taking initial parameter data into account. In this particular embodiment, the method starts with a step of obtaining initial parameter data, wherein the initial parameter data includes predefined parameter ranges for the at least one parameter determined based on a physical and/or electrical structure of the light driver device 1 and/or the building management system.

The initial parameter data may include parameter data that is generated by simulating or analysing the circuit diagrams of the electric circuits of light driver device 1, varying input signals to and output signals provided by the light driver device 1.

The step S2 of generating the usage profile for the light driver device 1 then generates the usage profile data based on the obtained parameter data, which is obtained in the step S1 and in combination with the obtained initial parameter data.

Fig. 2 shows a schematic view of major blocks of a light driver device 1 for driving a lighting module according to an embodiment.

The light driver 1 is a particular example for building management device. The light driver device 1 may form part of a luminaire. Nevertheless, the invention is not restricted to a light driver device 1, the driver device may alternatively be part of a dimming device for a window by driving an electrically operated blind, a window locking device, or a roll shutter. The driver device may drive an actuator, such as a door opener or a window opener.

Alternatively, the driver device may form part of a heating system, a venting and/or cooling device, such as an air conditioner, an air ventilator, a fan. The driver device may not only be part of a stationary device, alternatively a mobile device, e.g. a cleaning device, such as a cleaning robot, a window cleaner; a central control unit for controlling one or more building management devices; a user interface for controlling one or more building management devices, such as a switch (e.g. light switch), a touch panel, input device etc.; and any combination of the aforementioned devices.

In addition or alternatively, the building management device may comprise or correspond to any other building management device known in the art.

The light driver device 1 of fig. 2 comprises an AC/DC converter circuit 2, the control circuit 3, and a communication circuit 4.

The light driver device 1 may be an LED driver.

The light driver device 1 arranges its subassemblies AC/DC converter circuit 2, control circuit 3, and communication circuit 4 on one or more printed circuit boards (PCB). The subassemblies include essentially electronic circuits including a plurality of active and passive electronic components linked via the electric connections arranged on surfaces and within the PCB. The at least one PCB is located within a housing providing mechanical protection for the subassemblies of the light driver device 1.

The light driver device 1 has a plurality of interfaces.

A mains supply interface 6 of the light driver device 1 connects the light driver device 1 to a mains supply 7 of the building providing an AC mains supply.

The light driver device 1, in particular the AC/DC converter circuit 2, generates a DC load current I_{LED} and outputs the generated DC load current I_{LED} via an LED interface 8 of the light driver device 1 were lighting module 9.

The AC/DC converter circuit 2 may include electric circuitry, which is configured to perform as a rectifier circuit, e.g. implemented as a bridge or half-bridge rectifier, to perform power factor correction (PFC), to generate a DC bus voltage based on the AC mains voltage input to the mains supply interface 6, to perform DC/DC-conversion to convert the DC bus voltage to at least one DC output voltage U_{LED} for supplying the lighting module 9 via the LED interface 8.

The AC/DC converter circuit 2 may include at least one switched mode power supply circuit (SMPS) including a switch controlled by the control circuit 3 with a control signal 11.

The AC/DC converter circuit 2 may include a low voltage power supply circuits for generating supply voltages for the electric circuits included in the light driver device 1, e.g. the control circuit 3 and the communication circuit 4.

The control circuit 3 may receive basic sensor signals 12 from the AC/DC converter circuit 2. These sensor signals 12 may in particular include sensor data currently measured in the lighting driver 1, e.g. presence of the AC mains supply voltage at the mains supply input 6.

The lighting module 9 may include one or typically a plurality of individual LEDs emitting light.

The light driver 1 may be an emergency light driver. The emergency light driver monitors presence or absence of the mains supply voltage at the mains supply interface 6. In case of detecting failure of the mains supply voltage based on the sensor signal 12, the control circuit 3 controls switching of the AC/DC converter circuit 2 to an alternate electric power source, e. g. to a DC energy storage such as a battery, in order to ensure a continuing load current I_{LED} for a predetermined time with a predetermined current value at the LED interface 8 based on the alternate power source acting as an emergency power supply.

The control circuit 3 may receive external control commands in a driver control signal 13 for the light driver device 1 via the communication circuit 4 connected to a communication network. The driver control signal 13 may include the usage profile data generated externally to the light driver device 1.

The control circuit 3 may generate and output a driver output signal 14 from the light driver device 1 to other devices in a light system 30 via the communication circuit 4 connected to the communication network. The driver output signal 14 may include the usage profile data generated internally to the light driver device 1, for example by the control circuit 3.

The driver output signal 14 may further include the parameter data and the current parameter data obtained by the light driver device 1, for example by the control circuit 3 and the sensor circuit 2.1.

The driver output signal 14 may further include the signal to the building infrastructure system in case the anomalous event is determined.

Fig. 2 displays the communication circuit 4 configured for wired communication via a communication interface 10 of the light driver device 1 to a communication bus 5 connecting other devices of a light infrastructure system with a light driver device 1.

Alternatively, or even additionally, the communication circuit 4 may be adapted to perform wireless communication via one or more antennas with other devices of the light infrastructure system.

The communication circuit 4 and the communication interface 10 may communicate with the other devices of the light infrastructure system based on at least one of the lighting control standards DSI^{®}, DALI^{®}, DALI-2^{®}, D4i^{®} and KNX enabling a digital control of the light infrastructure system using a wired light control system.

The communication circuit 4 and the communication interface 10 may communicate with the other devices of the light infrastructure system based on at least one of the lighting control standards DALI+^{®} enabling a digital control of the light infrastructure system using a wireless light control system. Additionally or alternatively, the wireless light control system may base on a wireless communication protocol defined by a wireless communication standard, e.g. ZigBee^{®}, matter, Bluetooth Mesh^{®}, and Bluetooth LE^{®}.

A standard for communication circuit 4 and the communication interface 10 may base on the technologies defined in the series of technical standards known under IEC 62386.

The other devices connected to the communication interface 10 via the communication bus 5 may include allied system server 32, ON/OFF switches, dimmers, and presence detecting sensors.

DALI+ devices communicate using existing DALI commands, but transmit and receive these commands over a wireless and/or IP-based medium rather than the dedicated pair of wires used by DALI-2 and D4i.

The control circuit 3 may be implemented using an integrated circuit (IC), e.g. a microcontroller, a microprocessor or an application specific integrated circuit (ASIC) or a field-programmable gate array (FPGA) or any combination of these elements. The control circuit 3 may form an integral part of the AC/DC converter circuit 2.

The control circuit 3 may include a data storage providing data storage capacity in form of a memory 3.1.

The memory 3.1 may store program data, including program data implementing at least parts of the method for detecting anomalous events in the light driver device 1. The memory 3.1 may also store application data when executing an application, in particular the program implementing at least parts of the method for detecting anomalous events in the light driver device 1.

The memory 3.1 may in particular store usage profile data.

Additionally or alternatively, the control circuit 3 and the memory 3.1 may generate, manage and store one or more event counters, which count the occurrence of anomalous events based on the current parameter data.

Additionally or alternatively, the memory 3.1 may store parameter data and/or current parameter data.

The AC/DC converter circuit 2 may include at least one sensor circuit 2.1.

The sensor circuit 2.1 is configured to obtain parameter data during the profile generating phase and current parameter data during the monitoring phase on at least one physical parameter of the light driver device 1. The parameter data may in particular be obtained by measuring the at least one physical parameter, or by computing or estimating the parameter data based on one or measurements of the at least one physical parameter.

The at least one physical parameter may include at least one electrical parameter characterizing the operation of the light driver device 1, and in particular the AC/DC converter circuit 2 in the building infrastructure system. Examples for the electrical parameter are
- an average power output for a time period provided by the light driver device 1 via the LED interface 8,
- a load voltage provided by the light driver device 1at the LED interface 8,
- a load current I_{LED} provided by the light driver device 1 via the LED interface 8,
- a mains supply voltage provided to the light driver device 1 at the mains supply interface 6,
- a mains supply current provided to the light driver device 1 at the mains supply interface 6,
- a mains frequency of the mains supply at the mains supply interface 6,
- an average power consumption of the light driver device 1,
- a power loss of the light driver device 1,
- an energy conversion efficiency of the light driver device 1,
- an average rectifier half-bridge frequency in the light driver device 1, and
- an internal DC bus voltage ripple value in the light driver device 1.

The electrical parameter, in particular including a voltage, a current or a frequency may be available in the control circuit 3, e.g., the control circuit 3 configured to control the AC/DC converter circuit 2, or may be measured by the sensor circuit 2.1. The sensor circuit 2.1 may include a shunt resistor and/or measuring bridge to provide suitable measurement signals, which may be processed in the control circuit 3 further in order to generate the parameter data.

The power loss of the light driver device 1 may be computed by subtracting an electrical output power of the light driver device 1 from the electrical input power of the light driver device 1.

The energy conversion efficiency of the light driver device 1 may be computed by dividing the electrical output power of the light driver device 1 by the electrical input power of the light driver device 1.

The at least one physical parameter may include at least one operation parameter of the light driver device 1. The operation parameter may include one or more parameters for setting an operation state of the light driver device 1. The one or more operation parameters may correspond to control parameters for controlling operation of the light driver device 1. In the example of the light driver device 1 and the AC/DC converter circuit 2 providing a LED current ILED at the LED interface 8 to the lighting module 9, the at least one operation parameter may include a dimming level at which the lighting means 9 is controlled to operate. The diming level may have a percentage value ranging from 0% to 100%. A value of 0% for the dimming level corresponds to the LED module 9 emitting no light, and a value of 100% for the dimming level corresponds to the lighting means emitting a maximum of light. The at least one operation parameter may be known in the control circuit 3 controlling operation of the AC/DC converter circuit 2. Additionally or alternatively, the at least one operation parameter is received, e.g. via the communication circuit 4 and provided to the control circuit 3 in the control signal 13.

Additionally or alternatively, the at least one physical parameter may comprise at least one of a temperature parameter, e.g.
- a temperature of a control circuit 3 of the light driver device 1,
- a temperature on the printed circuit board of the light driver device 1, and
- a temperature within a housing of the light driver device 1.

The temperature may be measured already by the control circuit 3 configured to control the AC/DC converter circuit 2, or may be measured by the sensor circuit 2.1.

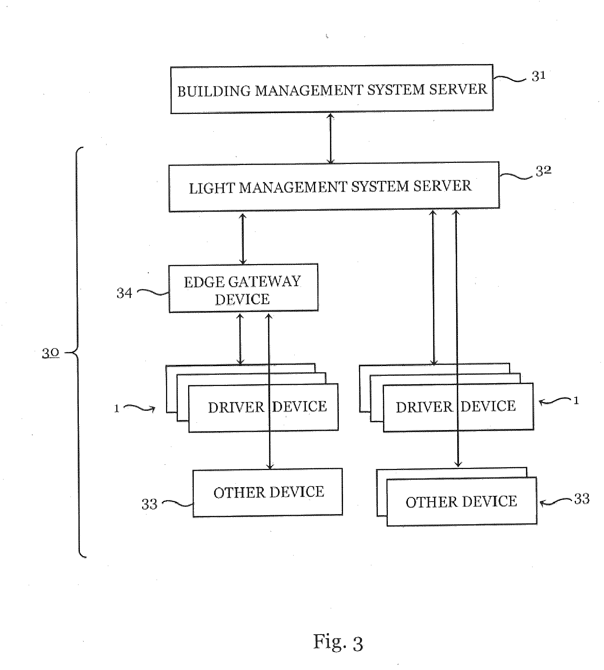

Fig. 3 illustrates the hierarchical structure of a building management system including or corresponding to a light system 30 with a plurality of light driver devices 1 in the light system 30 according to an embodiment.

The building management system comprises a building management server 31.

The building management server 31 is connected with a light management system server 32. The light management server 32 forms part of the light system 30, which furthermore includes a plurality of driver devices 1. The driver devices 1 may the structure of the LED driver device discussed with reference to figure 2 above.

The light system 30 arranges a number of driver devices 1 directly connected with a light management system server 32. Moreover, the light system 30 includes a plurality of other devices 33, which also connect directly to the light management server 32.

The other devices 33 may comprise, but are not limited to, a luminaire, a dimming device for a shading a window, such as an electrical blind, a sensor device, e. g. a movement detector or a presence detector, a security camera (CCTV), a smoke detector, an ambient light sensor, a humidity sensor, a temperature sensor, an audio sensor, e.g. microphone. The other devices 33 may include a sprinkler device, an alarm device, a door locking device, window locking device, or a roll shutter.

The other devices 33 may comprise an information output device, e.g. a display, a security sign, a loudspeaker.

The other devices 33 may comprise an actuator, e.g. a door opener, a window opener.

The other devices 33 may include a heating, venting and/or cooling device, for example an air conditioner, an air ventilator, a fan, a heating device or a humidifier.

The other devices 33 may further comprise a cleaning device, such as an autonomous cleaning device, a window cleaner; a control module for controlling one or more of the building management devices, a user interface for controlling one or more building management devices, such as a switch, e.g. an ON/OFF-switch, a dimming module, a touch panel, a numeric input device.

The other devices 33 may include any combination of the aforementioned examples of other devices 33.

Plural driver devices 1 are connected via an edge gateway device 34 to the light management system server 32. There may be additional other devices 33 not shown in figure 3, which are connected with the edge gateway device 34.

The building management server 31, the light management system server 32, the edge gateway device 34, the driver devices 1, and the other devices 33 may be linked via one or more communication networks, which may include wired and wireless communication networks based on same or on different communication standards.

All steps which are performed by the various entities described in the present disclosure as well as the functionalities described to be performed by the various entities are intended to mean that the respective entity is adapted to or configured to perform the respective steps and functionalities. In the claims as well as in the description the word "comprising" does not exclude the presence of other elements or steps.

Using the indefinite article "a" or "an" in combination with an entity does not exclude a plurality of entities A single element or other unit may fulfill the functions of several entities or items recited in the claims. The mere fact that different dependent claims recite certain measures, steps, and features of the method, driver device or building infrastructure system does not exclude that a combination of these measures, steps, and features cannot combined in an advantageous implementation.

## Claims

1. A method for detecting anomalous event in a driver device (1) of a building infrastructure system, in particular in a light driver device, the method comprising,
in a usage profile generating phase,
obtaining (S1) parameter data for at least one physical parameter of the driver device (1) during operation of the driver device (1) in the building infrastructure system during a predefined time period;
generating (S2) a usage profile for the driver device (1) based on the obtained parameter data, wherein the usage profile includes a characteristic parameter range for the at least one physical parameter determined based on the obtained parameter data; and,
in a monitoring phase,
obtaining (S3) current parameter data for the at least one physical parameter of the driver device (1);
determining (S4) whether an anomalous event in the driver device (1) has occurred by comparing the obtained current parameter data with the usage profile of the driver device (1); and
generating and outputting (S5) a signal based on the determined anomalous event.

2. The method according to claim 1, wherein the method comprises,
in the monitoring phase,
increasing a counter value of a counter of the predefined failure event when determining that the anomalous event has occurred, and
comparing the counter value with a threshold value, and outputting the signal based on the determined anomalous event in case the counter value is equal to or exceeds the threshold value.

3. The method according to claim 1, wherein the method comprises,
in the monitoring phase,
increasing a counter value of a counter of the predefined failure event when determining that the anomalous event has occurred, and
evaluating a rate of increase of the counter value, and outputting the signal based on the determined anomalous event in case the evaluated rate of increase of the counter value increases.

4. The method according to one of the preceding claims, wherein,
in the monitoring phase, comparing the obtained current parameter data with the usage profile of the driver device (1) comprises
comparing the obtained current parameter data with the characteristic parameter range of the usage profile, and
determining that the anomalous event occurred when the current parameter data is outside the characteristic parameter range.

5. The method according to one of the preceding claims, wherein the method comprises,
in the monitoring phase,
determining (S4) whether the anomalous event in the driver device (1) has occurred by evaluating the obtained current parameter data and obtained current parameter data of at least one previous processing cycle, and the usage profile of the driver device (1) with respect to trends in the current parameter data, current parameter data of the at least one previous processing cycle and the usage profile.

6. The method according to one of the preceding claims, wherein the method comprises,
in the monitoring phase,
updating the usage profile including the characteristic parameter range based on the current parameter data.

7. The method according to one of the preceding claims, wherein
the at least one physical parameter includes at least one of
an average dimming level for a predetermined time interval, a characteristic dimming level curve for the predetermined time interval, an average power output for the predetermined time interval,
a mains supply voltage provided to the driver device (1), a mains supply current provided to the driver device (1), a mains frequency of the mains supply (7), an average power consumption of the driver device (1),
a load voltage provided by the driver device (1), a load current (I_{LED}) provided by the driver device (1),
a power loss of the driver device (1), an energy conversion efficiency of the driver device (1),
an average rectifier half-bridge frequency, an internal DC bus voltage ripple value, a temperature of a control circuit (3) of the driver device (1), a temperature on a printed circuit board of the driver device (1), a temperature within a housing of the driver device (1).

8. The method according to one of the preceding claims, wherein the method comprises,
in the monitoring phase, at least one of
adjusting a least one setting of the driver device (1) based on the output signal,
storing data on the anomalous event based on the output signal in a data storage (3.1), and
outputting, based on the output signal, an alert to a building management server (31) or an operator.

9. The method according to one of the preceding claims, wherein the method comprises,
in the usage profile generating phase,
obtaining initial parameter data, wherein the initial parameter data includes predefined parameter ranges for the at least one physical parameter determined based on a physical and/or electrical structure of the driver device (1) and/or the building management system, and
generating (S2) the usage profile for the driver device (1) bases on the obtained parameter data and the obtained initial parameter data.

10. The method according to one of the preceding claims, wherein the method comprises
executing the usage profile generating phase in case of determining a structural change of the building infrastructure system.

11. The method according to one of the preceding claims, wherein
the method is executed at least in part by an edge gateway device (34), or by a light management server (32) or by a building management server (31).

12. The method according to one of the preceding claims, wherein the method comprises
executing the usage profile generating phase for each of a plurality of driver devices (1) of the building management system;
storing the generated usage profile for each driver device (1) of the plurality of driver devices (1); and
in the monitoring phase,
obtaining (S3) the current parameter data for the at least one physical parameter of each driver device (1) of the plurality of driver devices (1);
determining (S4) for each driver device (1) whether an anomalous event has occurred by comparing the obtained current parameter data with the stored usage profile for each driver device (1) of the plurality of driver devices (1);
generating and outputting (S5) by each driver device (1), the signal to the building infrastructure system in case the anomalous event is determined; wherein the method further comprises
determining a current state of the building management system based on the signals output by the plurality of driver devices (1).

13. A computer program comprising instructions, which when the program is executed by a computer or signal processor, cause the computer or digital signal processor to carry out the method of one of the preceding claims.

14. A driver device, in particular a light driver, comprising
a converter circuit (2) configured to output a load current (I_{LED}), and
a control circuit (3) configured to perform the method according to any of claims 1 to 11.

15. The driver device according to claim 14, comprising
a sensor circuit (2.1) for sensing the at least one physical parameter, wherein the at least one physical parameter is an electrical parameter of at least one electrical component of the converter circuit (2),
the at least one electrical component of the converter circuit (2) comprises or corresponds to at least one of a critical component with respect to a lifetime of the converter circuit (2).

16. A building infrastructure system comprising
a plurality of driver devices (1) according to claim 14 or 15, and
a building management server (31), wherein the building management server (31) is configured to execute the method according to one of the claims 1 to 12.
